Europäisches Patentamt

European Patent Office

Office européen des brevets

(11) Publication number: **0 188 212**
**B1**

## EUROPEAN PATENT SPECIFICATION

(45) Date of publication of patent specification: 25.04.90

(51) Int. Cl.⁵: **B 60 J 1/17, B 60 R 13/06**

(21) Application number: 86100124.6

(22) Date of filing: 07.01.86

(54) Window glass guide system for vehicle.

(30) Priority: 08.01.85 JP 803/85 u

(43) Date of publication of application:
23.07.86 Bulletin 86/30

(45) Publication of the grant of the patent:
25.04.90 Bulletin 90/17

(84) Designated Contracting States:
DE FR GB

(56) References cited:
EP-A-0 088 893
DE-A-2 452 470
DE-A-2 624 028
DE-A-2 633 969
US-A-3 413 760
US-A-3 703 053
US-A-3 925 931

(73) Proprietor: TOYOTA JIDOSHA KABUSHIKI
KAISHA
1, Toyota-cho Toyota-shi
Aichi-ken 471 (JP)

(72) Inventor: Ono, Kenzi
c/o TOYOTA JIDOSHA KABUSHIKI KAISHA
1, Toyota-cho Toyota-shi Aichi-ken (JP)

(74) Representative: Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a window glass guide system for a vehicle according to the preamble of claim 1.

As a means for decreasing air resistance and wind noises during high speed running of the motor vehicle, there has been proposed a so-called flush surface type motor vehicle, wherein the outer surface of a vehicle body, including the outer surfaces of the door glasses are made flush with one another.

As the means for making the door glass flush with a door window frame in a side door of a motor vehicle, there is one in which slide members shifted inwardly of the compartment are secured to end edges of the door glass and these slide members are guided in a manner to be slidable in the vertical direction by channel-shaped guide members disposed inwardly of the door glass of the door.

A window glass guide system for a vehicle according to the preamble of claim 1 is disclosed in document EP—A—0088893.

In this window glass guide system for a vehicle, each of slide members is provided at the top of each of the front and the rear end edges of the door glass, and a further slide member is provided at the bottom of the center of the door glass in the longitudinal direction thereof. All these slide members are guided vertically slidably by a front, a rear and a center guide members.

In this case, the rear slide member secured to the rear end edge and the center slide member are guided in a manner to be restrained in the thicknesswise direction of the glass and in the longitudinal direction of the door, and, the other front slide member is guided in a manner to be guided in a manner to be restrained in the thicknesswise direction of the glass.

In the window glass guide system for a vehicle with the above-described arrangement, the door glass can be vertically movable in a stabilized state, however, depending on the size of the door and the like, there may be cases where it is difficult to secure a space for mounting the center guide member.

Furthermore, the construction of providing three guide members is complicated, thus presenting such disadvantages that the manufacturing cost is raised, and moreover, the adjustment between the guide members during mounting takes much time.

It is therefore the primary object of the present invention to provide a window glass guide system for a vehicle, wherein the door glass can be smoothly, vertically moved, being held in a proper posture, without using a construction complicated and high in manufacturing cost.

This object is achieved by the features as indicated in the characterizing part of claim 1.

According to a preferred embodiment as defined in claim 2, the door glass has a substantially horizontal top end edge and an inclined end edge starting from an end portion of the top end edge, which is opposite to said second end edge and ending at the top end of the first end edge; wherein said second end edge of the door glass has a length substantially equal to the total height of the door glass.

The development of claim 3 provides that the guide member on one side and the guide member on the other side are fixed to stepped portions of a door window frame of the door facing to the slide members from the compartment, respectively, and provided with the guide grooves being of a U-shape in cross section.

According to the further development of claim 4, each of the slide members is provided at the outer end thereof with an externally threaded portion, which is threadably coupled into a nut inserted into a through-hole of the door glass, so as to be tightenedly fixed to the door glass.

Finally the door glass can be vertically movable by one arm-shaped window regulator provided at the center of the lower end portion of the door.

According to the present invention, the top slide member and the bottom slide member, which are secured to the top and the bottom of one end edge in the longitudinal direction of the door glass, are restrained not only in the thicknesswise direction of the door glass but also in the longitudinal direction of the door by the guide members on one side, so that the door glass can be held in a proper posture and the door glass can be smoothly moved in the vertical direction.

In consequence, necessity of a complicated construction of the center guide and the like for maintaining the posture of the door glass is eliminated, and a mere function of pushing up or pulling down the door glass is required of a window regulator, so that the construction can be simplified.

Figure 1 is a front view showing one embodiment of the window glass guide apparatus for a vehicle according to the present invention;

Figures 2 and 3 are enlarged sectional views taken along the lines II—II and III—III in Figure 1, respectively; and

Figure 4 is a perspective view showing the direction of restraining the door glass in the above-mentioned embodiment.

Description will hereunder be given of one embodiment of the present invention with reference to the drawings.

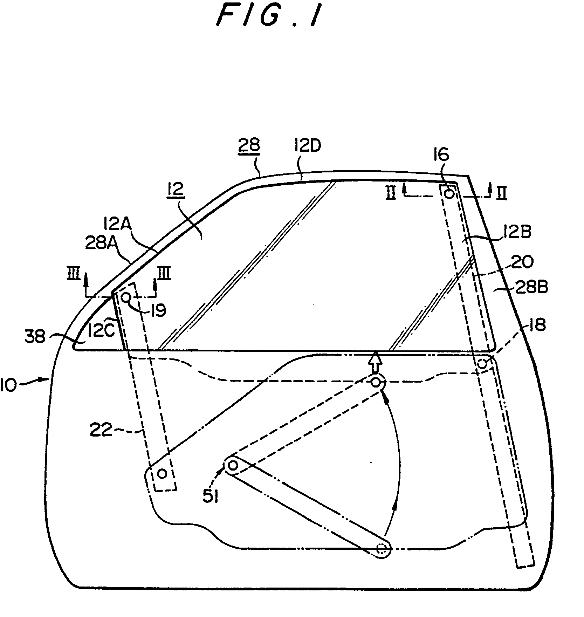

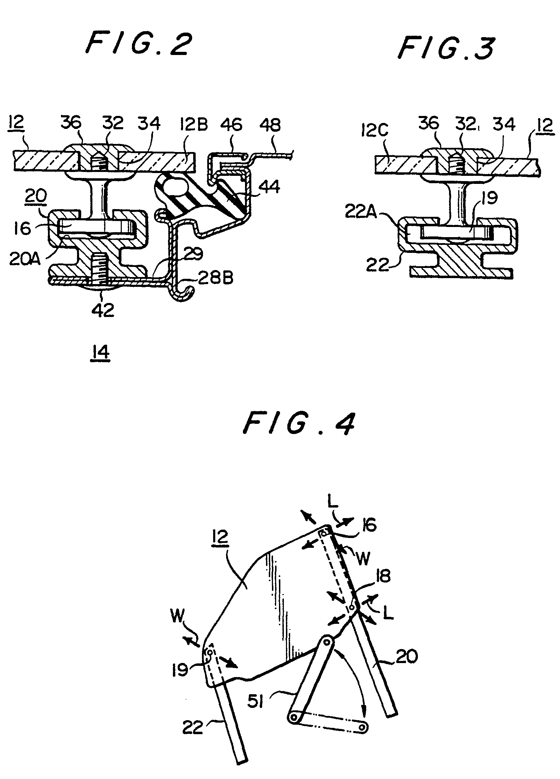

As shown in Figures 1 to 4, according to this embodiment, in a window glass guide system for a vehicle, wherein a top slide member 16, a bottom slide member 18 and a front slide member 19, which are protruded into a compartment 14, are secured to the top, the bottom of a rear end edge 12B opposed to an inclined end edge 12A of the door glass 12 and the top of a front end edge connected to the forward end of the inclined end edge 12A in a side door 10, respectively, and the top slide member 16, the bottom slide member 18 and the front slide member 19 are guided in a manner to be vertically slidable and restrained in the thicknesswise direction of the door glass by a rear guide member 20 and a front guide member 22, which are channel-shaped and secured to the side door 10 inside the compartment 14 inwardly of the door glass 12, the front slide member 19 is formed in such a manner that the width thereof has clearances in the longitudinal direction of the door relative to a guide groove 22A of the front guide member 22, and the top slide member 16 and the bottom slide member 18 are restrained in the longitudinal direction of the door by a guide groove 20A of the rear guide member 20. Arrow marks L and W shown in Figure 4 indicate the direction of the door glass 12 restrained by the guide members 20 and 22.

Here, the side door 10 is provided with a door window frame 28, wherein a front side of the door window frame 28 in the longitudinal direction of the vehicle is made to be an inclined side 28A along the inclined end edge 12A of the door glass 12, and a rear side of the door window frame 28 is made to be a vertical side 28B along the rear end edge 12B of the door glass 12. Furthermore, reference numeral 12D in Figure 1 indicates a substantially horizontal top end edge of the door glass 12.

As shown in Figures 2 to 4, each of the top slide member 16, the bottom slide member 18 and the front slide member 19 is provided at the outer end thereof with an externally threaded portion 32, which is threadably coupled into a nut 36 inserted into a nut 36 inserted into a through-hole 34 of the door glass 12, so as to be tightendly fixed to the door glass 12.

In Figure 1, designated at 38 is a triangular patch for blocking a triangular space disposed downwardly of the forward end portion of the inclined side 28A of the door window frame 28.

The front guide member 22 is disposed along the rear end of the triangular patch 38, and then, extended into a panel of the side door 10.

The front guide member 22 and the rear guide member 20 are fixed to stepped portions 29 of the door window frame 28 facing to the top and bottom slide members 16, 18 and the front slide member 19 from the compartment 14, respectively, and provided with the guide groove 20A of a U-shape in cross section.

The rear guide member 20 is mounted to the rear vertical side 28B of the door window frame 28 through screws 42 and secured and fixed at the lower half portion thereof to a door panel.

In Figure 2, denoted at 44 is a door glass weather strip interposed between the door glass 12 and the door window frame 28, for sealing a spaced formed therebetween, and 46 a door frame molding secured to an inner peripheral portion of a door outer panel 48.

The door glass 12 is vertically movable by one arm-shaped window regulator 51 provided at the center of the lower end portion of the door panel.

This window regulator 51 is rotatably driven by a regulator handle or a motor (both are not shown), and the forward end thereof is rotatably connected to the door glass 12.

Description will hereunder be given of an action of the above embodiment.

Referring to Figure 1, when the regulator handle or the motor is driven to raise the door glass 12 from the fully opened state indicated by two-dot chain lines to the fully closed state, a force for pushing up the door glass acts upon the forward end of the window regulator 51.

Out of three slide members secured to the window glass 12, the top slide member 16 and the bottom slide member 18 are restrained not only in the thicknesswise direction of the glass but also in the longitudinal direction of the door by the guide groove 20A of the rear guide member 20, so that the door glass 12 is always vertically moved in the correct state along the rear guide member 20 regardless of the construction of the window regulator 51.

In consequence, even if the window regulator 51 has a simple one-arm construction, there is no problem, and the center guide described in EP—A—0088893 is not necessary.

Additionally, the above embodiment is concerned with a front side door in a four-door vehicle or a side door in a two-door vehicle, however, the present invention need not necessarily be limited to this, and is applicable to a rear side door in a four-door vehicle.

In this case, the top slide member and the bottom slide member are to be secured to the front end edge of the door glass.

Furthermore, in the above embodiment, the one arm window regulator has been used, however, this may be replaced by a wire or any other door glass lifting mechanism. In this case, it is not necessary to provide a mechanism for maintaining the door glass horizontally in the door glass lifting mechanism.

Further, in the above embodiment, the top slide member 16, the bottom slide member 18 and the front slide member 19 are formed into disc-like members, which are guided by the rear guide member 20 and the front guide member 22, which are secured to positions adjacent the positions, where these slide members are secured to the door glass 12, on the side of the compartment 14, however, these slide members may be replaced by ones being of generally crank-shaped for example, and the forward ends of these slide members on the side of the compartment may be guided in the vertical direction by the guide members.

## Claims

1. A window glass guide system for a vehicle, wherein a rear top slide member (16) and a front top slide member (19) protruding into the vehicle interior are secured to the tops of the rear and front edges of a door glass (12) respectively, said rear and front top slide members (16, 19) being guided in a manner to be vertically slidable and restrained in the thicknesswise direction of the door glass by respective rear and front guide members (20, 22) secured to the door inside of the vehicle inwardly of the door glass (12), one of the top slide members (19) at a first edge (12C) of the door glass (12) being formed in such a manner that the width thereof has clearances in the longitudinal direction of the vehicle relative to a corresponding guide groove (22A) of the respective first guide member (22), the other top slide member (16) at the second end edge (12B) of the door glass (12) being restrained in the longitudinal direction of the vehicle by the corresponding guide groove (20A) of the respective second guide member (20), characterized in that a bottom slide member (18) protruding into the vehicle interior is secured to the bottom of the second end edge (12B) of the door glass (12) and is also guided in a manner to be vertically slidable and restrained in the thicknesswise direction of the door glass (12) and in the longitudinal direction of the vehicle by said guide groove (20A) of second guide member (20).

2. A window glass guide system for a vehicle as set forth in claim 1, wherein:

said door glass (12) has a substantially horizontal top end edge (12D) and an inclined end edge (12A) starting from an end portion of said top end edge (12D), which is opposite to said second end edge (12B) and ending at the top end of the first end edge (12C); and

said second end edge (12B) of the door glass (12) has a length substantially equal to the total height of the door glass (12).

3. A window glass guide system for a vehicle as set forth in claim 1 or 2, wherein said guide members (20 and 22) are fixed to stepped portions (29) of a door window frame (28) of the door (10) facing to the slide members (16, 18 and 19) from the compartment (14), respectively, and provided with the guide grooves (20A, 20B) being of a U-shape in cross section.

4. A window glass guide system for a vehicle as set forth in one of the claims 1 to 3, wherein each of the slide members (16, 18, 19) is provided at the outer end thereof with an externally threaded portion (32), which is threadably coupled into a nut (36) inserted into a through-hole (34) of the door glass (12), so as to be tightenedly fixed to the door glass (12).

5. A window glass guide system for a vehicle as set forth in claim 1, 2, 3 or 4, wherein the door glass (12) is vertically movable by one arm-shaped window regulator (51) provided at the center of the lower end portion of the door (10).

6. A window glass guide system according to one of the claims 1 to 5, wherein said first guide member (22) is provided at the front side of the door glass (12).

**Patentansprüche**

1. Fensterscheiben-Führungsvorrichtung für ein Fahrzeug, wobei ein hinteres oberes Gleitstück (16) und ein vorderes oberes Gleitstück (19), die in das Fahrzeuginnere vorragen, an den Oberteilen der hinteren sowie vorderen Kante einer Türscheibe (12) jeweils befestigt sind, das besagte hintere sowie vordere Gleitstück (16, 19) in einer Weise geführt werden, daß sie vertikal verschiebbar und in der Dickenrichtung der Türscheibe durch zugeordnete hintere sowie vordere Führungselemente (20, 22), welche an der Tür-Innenseite des Fahrzeugs einwärts der Türscheibe (12) befestigt sind, geführt sind, das eine der oberen Gleitstücke (19) an einer ersten Kante (12C) der Türscheibe (12) derart ausgebildet ist, daß seine Breite Freiäume in der Längsrichtung des Fahrzeugs mit Bezug zu einer zugeordneten Führungskehle (22A) des zugehörigen ersten Führungselements (22) hat, und das andere obere Gleitstück (16) an der zweiten Kante (12B) der Türscheibe (12) in der Längsrichtung des Fahrzeugs durch die zugeordnete Führungskehle (20A) des zugehörigen zweiten Führungsgliedes (20) festgehalten wird, dadurch gekennzeichnet, daß ein unteres, in das Fahrzeuginnere vorragendes Gleitstück (18) am unteren Teil der zweiten Endkante (12B) der Türscheibe (12) befestigt und ebenfalls in einer Weise geführt ist, daß es vertikal verschiebbar sowie in der Dickenrichtung der Türscheibe (12) und in der Längsrichtung des Fahrzeugs durch die besagte Führungskehle (20A) des zweiten Führungselements (20) festgehalten ist.

2. Fensterscheiben-Führungsvorrichtung für ein Fahrzeug nach Anspruch 1, wobei die besagte Türscheibe (12) eine im wesentlichen horizontale obere Endkante (12D) sowie eine geneigte Stirnkante (12A), die von einem Endabschnitt der genannten oberen Endkante (12D), welcher zur besagten zweiten Endkante (12B) entgegengesetzt ist, ausgeht sowie am oberen Ende der ersten Endkante (12C) endet, aufweist, und

die besagte zweite Endkante (12B) der Türscheibe (12) eine Länge hat, die im wesentlichen gleich der Gesamthöhe der Türscheibe (12) ist.

3. Fensterscheiben-Führungsvorrichtung für ein Fahrzeug nach Anspruch 1 oder 2, wobei die besagten Führungselemente (20 und 22) an Abwinkelungen (29) eines Türfensterrahmens (28) der Tür (10), die vom Passagierraum (14) aus jeweils den Gleitstücken (16, 18 und 19) gegenüberliegen sowie mit den im Querschnitt U-för-mig ausgebildeten Führungskehlen (20A, 20B) versehen sind, befestigt sind.

4. Fensterscheiben-Führungsvorrichtung für ein Fahrzeug nach einem der Ansprüche 1 bis 3, wobei jedes der Gleitstücke (16, 18, 19) an seinem äußeren Ende mit einem Außengewindeteil (32) versehen ist, das in eine in ein Durchgangsloch (34) der Türscheibe (12) eingesetzte Mutter (36) eingeschraubt ist, so daß es dicht an der Türscheibe (12) zu befestigen ist.

5. Fensterscheiben-Führungsvorrichtung für ein Fahrzeug nach Anspruch 1, 2, 3 oder 4, wobei die Türscheibe (12) durch einen armförmigen Fenster-Stellantrieb (51), der im Zentrum des unteren Endteils der Tür (10) vorgesehen ist, vertikal bewegbar ist.

6. Fensterscheiben-Führungsvorrichtung nach einem der Ansprüche 1 bis 5, wobei das besagte erste Führungselement (22) an der Frontseite der Türscheibe (22) vorgesehen ist.

## Revendications

1. Un système de guidage de vitre de fenêtre destiné à un véhicule dans lequel un élément coulissant supérieur arrière (16) et un élément coulissant supérieur avant (19) faisant saillie à l'intérieur du véhicule sont fixés respectivement aux sommets des bords arrière et avant d'une vitre (12) de portière, lesdits éléments coulissants supérieurs arrière et avant (16, 19) étant guidés de manière à pouvoir coulisser verticalement et à être retenus dans le sens de l'épaisseur de la vitre de portière au moyen d'éléments correspondants de guidage arrière et avant (20, 22) fixés à la portière à l'intérieur du véhicule, du côté intérieur de la vitre (12) de portière, un des éléments coulissant supérieur (19) situé sur un premier bord (12C) de la vitre (12) de portière étant conformé de manière telle qu'il présente du jeu en largeur dans le sens longitudinal du véhicule par rapport à une gorge de guidage correspondante (22A) du premier élément de guidage respectif (22), l'autre élément coulissant supérieur (16) situé sur le second bord (12B) d'extrémité de la vitre (12) de portière étant retenu dans le sens longitudinal du véhicule par la gorge de guidage correspondante (20A) du second élément (20) de guidage respectif, caractérisé en ce qu'un élément (18) coulissant inférieur, faisant saillie à l'intérieur du véhicule est fixé à la base du second bord d'extrémité (12B) de la vitre (12) de portière et est également guidé de manière à pourvoir coulisser verticalement et à être retenu dans le sens de l'épaisseur de la vitre (12) de portière et dans le sens longitudinal du véhicule par ladite gorge de guidage (20A) du second élément (20) de guidage.

2. Un système de guidage de vitre de fenêtre destiné à un véhicule selon la revendication 1, dans lequel ladite vitre (12) de portière présente un bord d'extrémité supérieur (12D) sensiblement horizontal et un bord d'extrémité incliné (12A) commençant à partir d'une partie d'extrémité dudit bord d'extrémité supérieur (12D), qui est à l'opposé dudit second bord d'extrémité (12B) et se terminant à l'extrémité supérieure du premier bord d'extrémité (12C); et dans lequel ledit second bord d'extrémité (12B) de la vitre (12) de portière présente une longueur sensiblement égale à la hauteur totale de la vitre (12) de portière.

3. Un système de guidage de vitre de fenêtre destiné à un véhicule selon la revendication 1 ou 2, dans lequel lesdits éléments de guidage (20 et 22) sont fixés sur les parties (29) formant gradin d'un cadre (28) de fenêtre de portière de la portière (10) dirigées respectivement vers les éléments (16, 18 et 19) de guidage à partir de l'habitacle (14) et munies de gorges (20A, 20B) de guidage qui ont une section transversale en forme de U.

4. Un système de guidage de vitre de fenêtre destiné à un véhicule selon l'une des revendications 1 à 3, dans lequel chacun des éléments coulissants (16, 18, 19) est muni à son extrémité extérieure d'une partie filetée extérieurement (32), qui est accouplée par vissage à un écrou (36) inséré dans un trou traversant (34) de la vitre (12) de fenêtre, de façon à ce qu'il soit fixé de manière serrée à la vitre (12) de fenêtre.

5. Un système de guidage de vitre de fenêtre destiné à un véhicule selon la revendication 1, 2, 3 ou 4, dans lequel la vitre de portière (12) est susceptible d'être déplacée verticalement au moyen d'un lève-glace (51) mono-bras monté au centre de la partie d'extrémité inférieure de la fenêtre (10).

6. Un système de guidage de vitre de fenêtre destiné à un véhicule selon l'une des revendications 1 à 5, dans lequel ledit premier élément de guidage (22) est monté sur le côté avant de la vitre de portière (12).

# FIG. 1

# FIG.2

# FIG.3

# FIG.4